# EUROPEAN PATENT SPECIFICATION

(11) **EP 0 423 057 B1**
(45) Date of publication and mention of the grant of the patent: **13.03.1996**
(21) Application number: 90630169.2
(22) Date of filing: 04.10.1990
(51) Int. Cl.: F16D 69/00, F16D 65/02, F16D 65/08

(54) **Noise abating brake shoe**
Geräuschmindernder Bremsschuh
Sabot de frein anti-bruit

(30) Priority: 10.10.1989 US 419487
(43) Date of publication of application: 17.04.1991
(60) Divisional application: 94201700.5
(73) Proprietor: PNEUMO ABEX CORPORATION, Hampton, New Hampshire 03842 (US)
(72) Inventor: Hummel, Alan R., Winchester, Virginia 22601 (US); Swadley, David L., Stephens City, Virginia 22655 (US)
(74) Representative: Schmitz, Jean-Marie

(56) References cited:
- DE-A- 3 734 289
- DE-B- 1 070 666
- GB-A- 365 264
- GB-A- 654 669
- GB-A- 1 359 570
- US-A- 1 872 547
- US-A- 2 631 961
- US-A- 2 861 964
- US-A- 2 943 713
- PATENT ABSTRACTS OF JAPAN vol. 6, no. 216 (M-168)(1094) 29 October 1982, & JP-A-57 120 741 (AKEBONO BRAKE KOGYO K.K.) 27 July 1982

## Description

The present invention concerns an elastomeric sound damping material according to the precharacterizing portion of claim 1.

For some time automotive manufacturers have been aware that the application of disc or drum brakes to slow or stop a vehicle may cause a significant amount of noise to emanate from the vehicle. It has been learned that such noise originates at the interface of a brake drum and a friction material brake block or at the interface of a rotor and the friction material of a disc brake pad during the braking application. During such application a resonance develops at the friction material brake drum or rotor interface which may be transmitted through the brake shoe assembly, the brake mounting hardware and into the suspension to cause objectionable noise to emanate from the vehicle.

Numerous attempts have been made to reduce the resonance vibration imparted during the braking operation. In vehicles equipped with disc brakes in which a disc brake pad engages a rotor, resonant vibrations have been reduced by providing a resilient coating at the interface between a disc brake pad backing plate and a caliper piston. Unfortunately, a conventional drum brake mechanism does not lend itself to such a solution. In an attempt to reduce the aforementioned resonant vibrations it has been the practice to stiffen certain brake and suspension system components to reduce their susceptibility to developing sympathetic resonant vibrations. Attempts to stiffen such systems have included casting ribs on the exterior surface of a brake drum to stiffen the drum, casting brake drums with a heavy ring of metal around the edge of the open end of the drum to stiffen the drum and welding supports on the suspension system to more firmly anchor suspension components to reduce their ability to transmit and/or amplify vibrations. Additionally, heavy rubber bands sometimes are secured to the exterior surface of brake drums in an attempt to reduce the vibrations transmitted therethrough. Unfortunately, none of the aforementioned mentions provide a definitive solution to the problem applicable to all vehicles.

Large vehicles such as trucks and busses are particularly susceptible to the generation of excessive noise during the braking process and the aforementioned attempts to reduce the resonance emanating from the brake drum friction material interface have been least successful in these applications.

The US-A-2 861 964 discloses a molded composition brake block comprising hard ferrous metal, heat-cured granules of cured thermosetting resins, cellulosic reinforcing fiber, non-ferrous inorganic and organic filler and an organic binder.

The DE-A-1 070 666 describes a brake block comprising organic friction material, heat cured particles and material vulcanized or synthetic rubber and fillers.

Accordingly, it is desirable to provide an automotive brake shoe assembly which is capable of interrupting and reducing the noise carrying vibrations originating at the friction material/brake drum interface during the braking application. It has been found desirable to interrupt these noise transmitting vibrations as close to this interface as possible.

The present invention provides a noise abating friction material block for an automotive brake shoe assembly comprising a mixture of a particulate elastomeric sound damping material and conventional automotive friction material ingredients.

The elastomeric sound damping material of the present invention is defined in the characterizing portion of claim 1.

The present invention also provides a noise abating automotive brake shoe assembly having a metal brake shoe with a flat shoe table for supporting a friction material brake block, a friction material brake block having an inside diameter which faces the shoe table and a thin layer of elastomeric sound damping material interposed between the shoe table of the brake shoe and the inside diameter of the brake block to resiliently support said brake block on said shoe table to reduce noise causing resonants between said brake shoe and said brake block.

In order that the invention may be fully understood reference is made on the accompanying drawing wherein

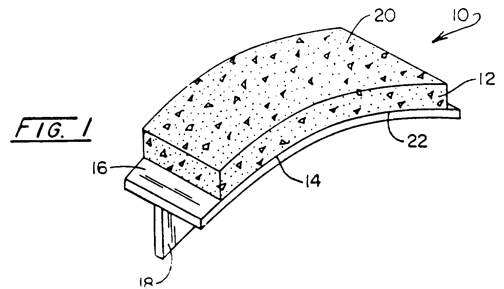

Fig. 1 illustrates a noise abating friction material block mounted on the shoe table of a metal brake shoe.

It has been learned that objectionable noise causing vibrations originate at the interface of the outer diametral surface of a friction material brake block and the mating surface of a brake drum during the braking process. A resonance occurs as the vibrations are transmitted through the metal brake shoe assembly to brake mounting hardware and thereafter to suspension components of the vehicle. It has been found that the objectionable noise causing vibrations most effectively can be reduced by damping the resonant vibrations as close to the origin as possible. As a result of this discovery, a noise abating friction material block has been developed pursuant to the subject invention.

Turning to Fig. 1, a brake shoe assembly (10) incorporates a noise abating friction material brake block (12) and a metal brake shoe (14). The brake shoe includes an arcuate flat shoe table (16) adapted to mount the brake block (12) and a perpendicular shoe web (18) which extends from the shoe table and acts to reinforce the shoe table and to provide abutments for a brake actuating mechanism not shown. The brake block (12) has an outer diameter surface (20) adapted to engage a complimentary surface on a brake drum not shown and an inside diameter surface (22) which mounts on the shoe table (16). The brake block (12) of the present invention may be attached to the brake shoe (14) by an adhesive at the interface of the brake shoe and the brake block which may be cured by a combination of increased temperature and pressure or it may be attached by rivets or by bolts not shown.

In the embodiment of the invention depicted in Fig. 1, the brake block (12) functions to prevent the transmission and resonance of noise causing vibrations originating at the interface of the outer diameter surface (20) of the brake block (12) and a brake drum not shown. The brake block (12) of the present invention incorporates a mixture of a particulate elastomeric sound damping material and conventional automotive friction material ingredients. The preferred formulation for the elastomeric sound damping material particles comprises about 2 to 15 percent by weight cured cashew nut shell resin, 5 to 25 percent by weight of nitrile rubber particles, 8 to 30 percent resin binder system, 4 to 20 percent fibers, 5 to 18 percent carbon materials and 20 to 40 percent fillers. It has been found that the resin binder system may be phenolic or cashew. Additionally, the fibers may be glass, rock wool, processed mineral fibers or a refractory material fiber. The carbon materials may be graphite, coke, coal particles, carbon black or any combination or descendent thereof. With respect to fillers, calcium carbonate and barium sulphate have been found to be economical and acceptable.

In the manufacture of the elastomeric sound damping material for the brake shoe of the present invention, the elements described above are mixed using conventional commercial mixing techniques and equipments. Thereafter the mix is extruded utilizing conventional equipment into a desired shape. Thereafter, the extruded mix shapes are cured by being subjected to a pre-cure cycle of soaking for ten hours in air at 121°C (250 F.) followed by soaking in air for three hours at 204°C (400 F). Thereafter, the extruded mix shapes are converted into particles ranging in size from 0.074 to 3.36 mm (six to two hundred mesh) using equipment such as a hammermill.

The elastomeric sound damping particles are added to the elements comprising a desired automotive friction material mix.

Examples of conventional automotive friction materials would be as follows:

| Class of Material | Examples | % by weight |
|---|---|---|
| Fibers | asbestos, glass, ceramic, metal | 5-65 |
| Binders | phenolic | 5-25 |
| Organic friction modifiers | rubber, cashew particles | 0-20 |
| Inorganic friction modifiers | ceramic, silica, rottenstone, alumina | 0-15 |
| Wear control agents | carbon, graphite | 3-15 |
| Inorganic fillers | barytes, calcium carbonate | 5-60 |
| Metal particles | zinc, brass, aluminum copper, steel | 0-15 |

The sound damping material addition preferably ranges from 2 to 30 percent by weight. The elastomeric sound damping material particles are mixed, with those of the friction material in such a way as to make the brake block a homogeneous element as near as possible. After the elastomeric sound damping material particles are added to the components comprising the friction material ingredients, the components are mixed, pre-cured and cured in the same manner as any conventional automotive friction material. Additionally, the brake block may be ground to any desired shape to create a desired brake block. Thereafter the brake block would be mounted on a metal brake shoe to provide a brake shoe assembly.

Although the exact operation of the elastomeric sound damping material particles within the automotive friction material to reduce the noise occurring during braking of a vehicle are not fully understood, it has been suggested that the elastomeric particles inhibit development of a noise causing vibrational frequency within the friction material brake block itself. Additionally, it has been suggested that the elastomeric sound damping material particles also function to add a degree of resilience to the friction material block at the interface of the inside diameter surface and the table of the metal brake shoe when the elements are assembled.

When the sound damping material particles are added to conventional automotive friction material ingredients in the preferred range of 2 to 30 percent by weight it has been found that good wear characteristics of the brake block are maintained and appropriate governmental approval of the brake block may be obtained.

Although the noise abating friction material block (12) described in connection with Fig. 1 has been found to provide a brake shoe assembly having suitable wear and performance characteristics, there are some applications where it would be preferable to utilize a brake shoe assembly having a brake block manufactured from conventional automotive friction material ingredients without the addition of elastomeric sound damping material particles. In these applications, it has been found that the addition of a separate elastomeric sound damping material element formed from the same ingredients as the particles introduced into the noise abating friction material brake block described in connection with Fig. 1 may be interposed between the table of a metal brake shoe and a conventional friction material brake block to provide an effective noise abating brake shoe assembly.

Since certain changes may be made to the above described apparatus, system and method without departing from the scope of the invention as claimed, it is intended that all matter contained in the description thereof or shown in the accompanying drawings shall be interpreted as illustrative and not in a limiting sense.

## Claims

1. An elastomeric sound damping material incorporated as discrete, heat-cured particles in a brake shoe characterized in consisting essentially of from 2 to 15 percent by weight of cured cashew nut shell resin, from 5 to 25 percent by weight of a nitrile rubber, from 3 to 30 percent by weight of a resin binder, from 4 to 20 percent by weight of a fiber selected from a group consisting of metal, glass, mineral, rock wool and refractory and from 5 to 18 percent of a substantially carbon material.

2. The elastomeric sound damping material of claim 1 characterized in that said resin binder is phenolic.

3. The elastomeric sound damping material of claim 1 characterized in that said resin binder is cashew nut shell resin.

4. The elastomeric sound damping material of claim 1 characterized in that said fibers are glass.

5. The elastomeric sound damping material of claim 1 characterized in that said fibers are rock wool.

6. The elastomeric sound damping material of claim 1 characterized in that said fibers are processed mineral fibers.

7. The elastomeric sound damping material of claim 1 characterized in that said fibers are refractory material.

8. The elastomeric sound damping material of claim 1 characterized in that said fibers are iron.

9. The elastomeric sound damping material of claim 1 characterized in that the balance is fillers.

10. The elastomeric sound damping material of claim 9 characterized in that said filler is calcium carbonate.

11. The elastomeric sound damping material of claim 9 characterized in that said filler is barium sulphate.

12. The elastomeric sound damping material of claim 1 characterized in that said carbon material is graphite.

13. The elastomeric sound damping material of claim 1 characterized in that said carbon material is coke.

14. The elastomeric sound damping material of claim 1 characterized in that said carbon material is coal particles.

15. The elastomeric sound damping material of claim 1 characterized in that said carbon material is carbon black.

16. A noise abating friction material composition for an automotive brake shoe characterized in comprising: a mixture of from about 2 to about 30 percent by weight of the particulate elastomeric sound damping material of claim 1 with the remainder being conventional automotive friction material ingredients.

17. The noise abating friction material block of claim 16, characterized in that said elastomeric sound damping material particles have a size of from 0.074 to 3.36 mm (6 to 200 mesh).

## Patentansprüche

1. Elastomeres, schalldämpfendes Material, das als diskrete, warmgehärtete Partikeln in einem Bremsbelag enthalten ist, dadurch gekennzeichnet, daß es vorwiegend besteht aus 2 bis 15 Gewichtsprozent gehärtetem Acajounußschalenharz, 5 bis 25 Gewichtsprozent eines Nitrilgummis, 8 bis 30 Gewichtsprozent eines Harzbindemittels, 4 bis 20 Gewichtsprozent einer Faser, die aus einer Gruppe ausgewählt ist, welche aus Metall, Glas, Mineralstoff, Steinwolle und feuerfestem Material besteht, und 5 bis 18 Prozent eines im wesentlichen aus Kohlenstoff bestehenden Materials.

2. Elastomeres, schalldämpfendes Material nach Anspruch 1, dadurch gekennzeichnet, daß das Harzbindemittel phenolisch ist.

3. Elastomeres, schalldämpfendes Material nach Anspruch 1, dadurch gekennzeichnet, daß das Harzbindemittel Acajounußschalenharz ist.

4. Elastomeres, schalldämpfendes Material nach Anspruch 1, dadurch gekennzeichnet, daß die Fasern Glas sind.

5. Elastomeres, schalldämpfendes Material nach Anspruch 1, dadurch gekennzeichnet, daß die Fasern Steinwolle sind.

6. Elastomeres, schalldämpfendes Material nach Anspruch 1, dadurch gekennzeichnet, daß die Fasern behandelte Mineralfasern sind.

7. Elastomeres, schalldämpfendes Material nach Anspruch 1, dadurch gekennzeichnet, daß die Fasern feuerfestes Material sind.

8. Elastomeres, schalldämpfendes Material nach Anspruch 1, dadurch gekennzeichnet, daß die Fasern Eisen sind.

9. Elastomeres, schalldämpfendes Material nach Anspruch 1, dadurch gekennzeichnet, daß der Rest Füllstoffe sind.

10. Elastomeres, schalldämpfendes Material nach Anspruch 9, dadurch gekennzeichnet, daß der Füllstoff Calciumcarbonat ist.

11. Elastomeres, schalldämpfendes Material nach Anspruch 9, dadurch gekennzeichnet, daß der Füllstoff Bariumsulfat ist.

12. Elastomeres, schalldämpfendes Material nach Anspruch 1, dadurch gekennzeichnet, daß das Kohlenstoffmaterial Graphit ist.

13. Elastomeres, schalldämpfendes Material nach Anspruch 1, dadurch gekennzeichnet, daß das Kohlenstoffmaterial Koks ist.

14. Elastomeres, schalldämpfendes Material nach Anspruch 1, dadurch gekennzeichnet, daß das Kohlenstoffmaterial Kohlepartikeln sind.

15. Elastomeres, schalldämpfendes Material nach Anspruch 1, dadurch gekennzeichnet, daß das Kohlenstoffmaterial Ruß ist.

16. Geräuschmindernde Reibmaterialzusammensetzung für eine Automobilbremsbacke, gekennzeichnet durch eine Mischung aus etwa 2 bis etwa 30 Gewichtsprozent des teilchenförmigen, elastomer ren, schalldämpfenden Materials nach Anspruch 1, wobei der Rest herkömmliche Automobilreibmaterialbestandteile sind.

17. Geräuschmindernder Reibmaterialbelag nach Anspruch 16, dadurch gekennzeichnet, daß die Partikeln aus elastomerem, schalldämpfendem Material eine Größe von 0,074 bis 3.36 mm (6 bis 200 mesh) haben.

## Revendications

1. Un matériau élastomère anti-bruit incorporant de manière discrète des particules cuites à la chaleur dans un sabot de frein caractérisé en ce qu'il consiste principalement en 2 à 15 pourcents en poids de résine de coquille de noix d'acajou, de 5 à 25 pourcents en poids d'un caoutchouc nitrile, de 8 à 30 pourcents en poids d'un liant de résine, de 4 à 20 pourcents en poids d'une fibre sélectionnée d'un groupe composé de métal, de verre, de minéral, de laine de roche et de matériau réfractaire et de substantiellement 5 à 18 pourcents de matériau de carbone.

2. Le matériau élastomère anti-bruit selon la revendication 1 caractérisé en ce que ledit liant de résine est phénolique.

3. Le matériau élastomère anti-bruit selon la revendication 1 caractérisé en ce que le-dit liant de résine est une résine de coquille de noix d'acajou.

4. Le matériau élastomère anti-bruit selon la revendication 1 caractérisé en ce que lesdites fibres sont en verre.

5. Le matériau élastomère anti-bruit selon la revendication 1 caractérisé en ce que lesdites fibres sont en laine de roche.

6. Le matériau élastomérique anti-bruit selon la revendication 1 caractérisé en ce que lesdites fibres sont des fibres minérales traitées.

7. Le matériau élastomère anti-bruit selon la revendication 1 caractérisé en ce que lesdites fibres sont en matériau réfractaire.

8. Le matériau élastomère anti-bruit selon la revendication 1 caractérisé en ce que lesdites fibres sont en fer.

9. Le matériau élastomère anti-bruit selon la revendication 1 caractérisé en ce que le complément est de la charge.

10. Le matériau élastomère anti-bruit selon la revendication 9 caractérisé en ce que ladite charge est du carbonate de calcium.

11. Le matériau élastomère anti-bruit selon la revendication 9 caractérisé en ce que ladite charge est du sulfate de barium.

12. Le matériau élastomère anti-bruit selon la revendication 1 caractérisé en ce que ledit matériau de carbone est du graphite.

13. Le matériau élastomère anti-bruit selon la revendication 1 caractérisé en ce que ledit matériau de carbone est du coke.

14. Le matériau élastomère anti-bruit selon la revendication 1 caractérisé en ce que ledit matériau de carbone est composé de particules de charbon.

15. Le matériau élastomère anti-bruit selon la revendication 1 caractérisé en ce que ledit matériau de carbone est du noir de carbone.

16. Une composition de matériau de frottement pour un sabot de frein pour automobile caractérisé en ce qu'il comprend: un mélange d'environ 2 à environ 30 pourcents en poids du matériau particulaire élastomère anti-bruit selon la revendication 1 le restant étant des ingrédients de matériau de frottement automobile conventionnels.

17. Le bloc en matériau de frottement anti-bruit selon la revendication 16, caractérisé en ce que les particules en matériau élastomère anti-bruit ont une taille de 0,074 à 3,36 mm (6 à 200 mesh).
